# EUROPEAN PATENT SPECIFICATION

(11) **EP 2 452 103 B1**
(45) Date of publication and mention of the grant of the patent: **31.07.2013**
(21) Application number: 10745389.6
(22) Date of filing: 29.06.2010
(51) Int. Cl.: F16J 15/06, B21K 25/00, B23P 11/00, F16B 17/00, F16H 57/02

(54) **SECURING METHODS**
SICHERUNGSVERFAHREN
PROCÉDÉS DE RETENUE

(30) Priority: 07.07.2009 GB 0911738
(43) Date of publication of application: 16.05.2012
(73) Proprietor: AGCO GmbH, 87616 Marktoberdorf (DE)
(72) Inventor: PARGMANN, Hajo, 87647 Unterthingau (DE); KREIGER, Sven, 87616 Marktoberdorf (DE)
(74) Representative: Smith, Louise Marie
(86) International application number: PCT/IB2010/001681
(87) International publication number: WO 2011/004252

(56) References cited:
- FR-A1- 2 805 482
- GB-A- 2 118 273
- US-A- 5 320 587
- US-A- 5 536 219

## Description

This invention relates to securing methods and in particular to such method which can be used to secure an annular planetary ring gear into a tractor back axle housing.

It is an object to provide an improved securing method suitable for the above use.

GB2118273 discloses a hub assembly for a clutch driven plate which comprises a hub and flange force fitted together, the flange having hard teeth which cut serrations in the hub during assembly. The hub is provided with a groove which is partially overhung by an abutment sleeve.

US5320587 discloses a ring gear attached to a case. The ring gear is positioned around the body of the case with the flat side facing an annular seat forming a stop on a flange on the case.

US 5536219 discloses a rear axle case on a tractor having a brake support in contact with a ring gear. Outward movement of the brake support is stopped by contact with the ring gear. The brake support and ring gear are both prevented from rotating relative to the rear axle case by a fixing device comprising a spacer mounted on a knock pin which engages with a friction plate associated with the brake plates.

Thus according to the present invention there is provided for a method of securing a first component in an aperture in a second component, the method comprising the steps of forming gripping formations and a seal receiving recess in an outer peripheral surface of the first component or in an inner peripheral surface of the aperture, pressing the first component into the aperture in the second component so that the gripping formation cut into the cooperating surface of the other component to hold the first component in the aperture, and inserting a sealing member into the sealing recess to prevent any fragments of either component dislodged during the pressing operation from escaping from between the components, characterised in that the first component is an annular planetary gear ring and the second component is a tractor axle housing.

Also according to the present invention there is provided a tractor axle housing with an annular planetary ring gear in accordance with claim 6.

Such a method is for securing an annular hardened and machined planetary ring gear into a cast iron tractor back axle housing as the seal prevents any fragments dislodged from the cast iron housing by the hardened ring gear entering the back axle and causing subsequent serious damage to any gearing located within the axle housing. Such fragments can, for example, be dislodged by lubricating oil inside the housing.

The seal receiving recess may be provided with a seal retaining groove which receives a projection on the seal to hold the seal in the recess. This seal is preferably formed from polymeric material.

This seal is preferably of a generally L-shaped cross section with one arm of the L-shaped seal extending into the seal retaining groove and the other arm of the seal extending over an outer face of the second component at a location radially outboard of the first component. The outer peripheral surface of the first component or the inner peripheral surface of the aperture are preferably provided with a groove inward of the seal receiving recess which receives fragments dislodged during the pressing operation.

The present invention will now be described, by way of example only, with reference to the accompanying drawings in which;-
- Figure 1: shows a cross section through part of a tractor back axle in which an annular planetary ring gear is secured into the axle housing using a method in accordance with the present invention;
- Figure 2: shows an enlarged view part of the cross section of Figure 1 showing the interface between the planetary gear and axle housing;
- Figure 3: shows on an enlarged scale the sealing member used in the securing method of the present invention, and
- Figure 4: shows a perspective view of part of the outer periphery of the annual planetary ring gear having the gripping formations provided in the method of the present invention.

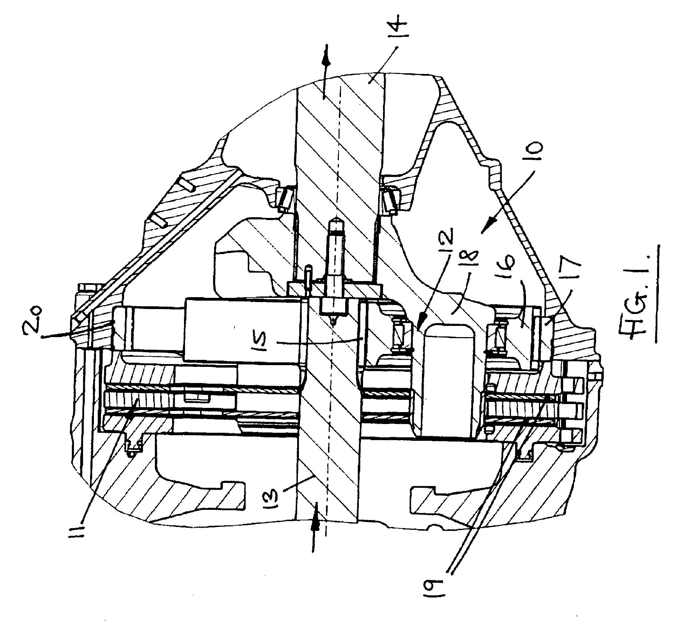

Referring to the drawings, Figure 1 shows a tractor back axle housing 10 which houses a multi-plate disc brake 11 and a planetary reduction gear 12. Power from the axle differential (not shown) is transmitted by shaft 13 to the planetary reduction gear 12 and hence by the drive shaft 14 to an associated wheel hub (not shown).

The planetary reduction gear 12 comprises a sun gear 15 formed on the end of shaft 13 which meshes with planet gears 16 which in turn mesh with an annulus gear 17 which is pressed into the back axle housing 10. The planet gears 16 are carried on a planet carrier 18 which is in turn connected with drive shaft 14. The planet carrier 18 also supports brake discs 19 which form part of the multi-plate disc brake 11.

The present invention is concerned with the method for securing the annulus gear 17 in the aperture 20 formed in the back axle housing 10.

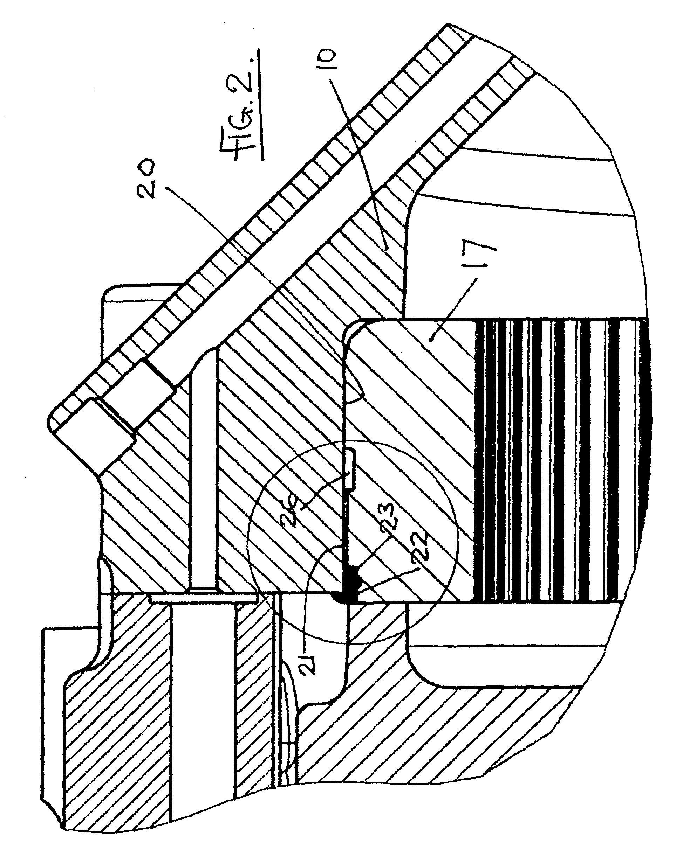

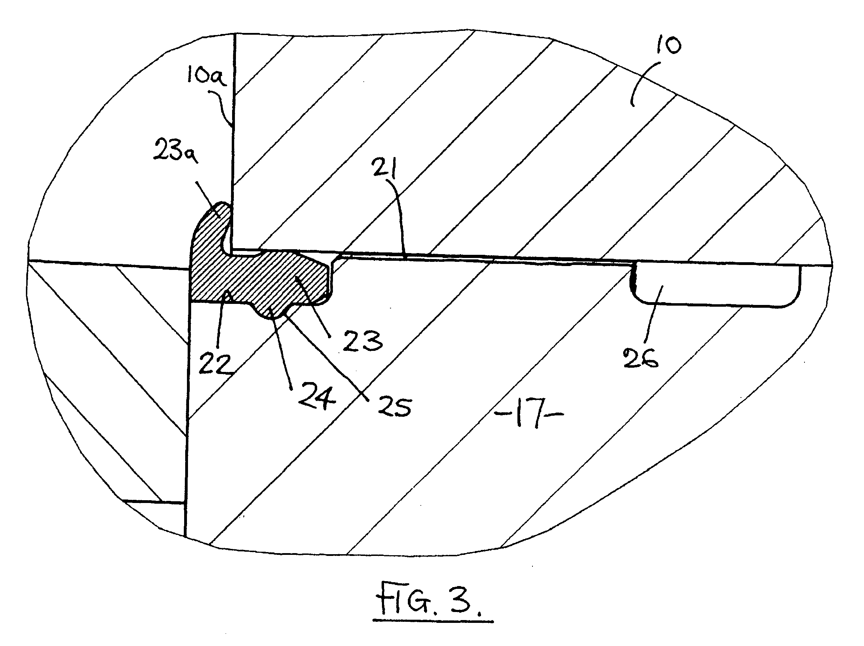

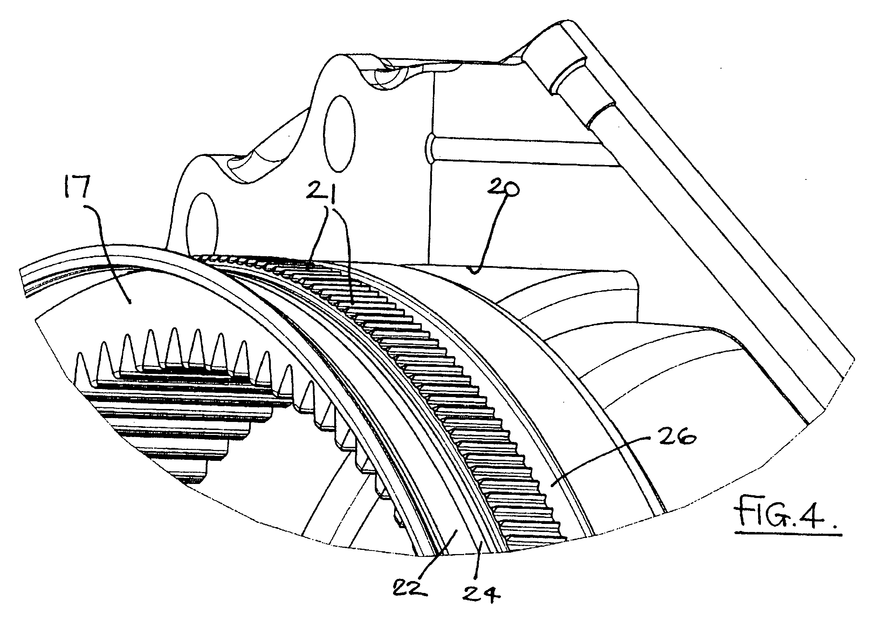

As can be best seen in Figure 4, the outer peripheral surface of the annulus gear 17 is provided with gripping formations 21 in the form of axially extending gripping teeth having a typical depth of 0.5mm and a spacing between adjacent teeth of 1.0mm. To the left of the gripping teeth 21, as viewed in Figures 2 to 4, a seal receiving annular recess 22 is formed in the outer periphery of the annulus gear 17. A generally L-shaped annular seal 23 is disposed in the recess 22 as will be described hereinafter. The seal is retained in the recess 22 by the inter-action between an annular projection 24 on the seal 23 and a seal retaining groove 25 formed in the bottom of recess 22.

Immediately to the right of gripping teeth 21 is formed an annular fragment receiving groove 26 whose use will be described hereinafter.

As will be appreciated, the annulus gear 17 is hardened to ensure adequate wear life during use of the associated tractor. Hence when the annulus gear 17 is pressed into the aperture 20 and back axle 10 the gripping teeth 21 tend to dig into the back axle housing 10, which is of a softer cast iron material, and fragments of material may be dislodged from the back axle housing. These fragments tend to be captured in annular groove 26 although some of the fragments may still lie between the annulus gear 17 and the back axle housing 10 as the root circle of the gripping teeth 21 is of a smaller diameter than aperture 20. These fragments can be carried by lubricating oil in the back axle housing 10 and can domage other components, e.g. the planetary reduction gear 12.

Before or after the annulus gear 17 has been fully pressed home into the aperture 20, the annular seal 23 is inserted into the seal receiving recess 22. The seal has a lobe 23a which presses against the face 10a of the back axle housing and ensures that any fragments which lie either in the groove 26 or between the back axle 10 and the annulus gear 17 do not escape and cause damage to either the planetary reduction gear 12 or any other component housed within the back axle 10.

The present invention thus provides an improved method of securing an annular planetary ring gear into a tractor back axle housing which prevents the escape of any fragments which are dislodged during the pressing operation.

## Claims

1. A method of securing a first component (17) in an aperture (20) in a second component (10), the method comprising the steps of forming gripping formations (21) and a seal receiving recess (22) in an outer peripheral surface of the first component (17) or in an inner peripheral surface of the aperture (20), pressing the first component into the aperture in the second component so that the gripping formations (21) cut into the cooperating surface of the other component (10) hold the first component (17) in the aperture (20), and inserting a sealing member (23) into the sealing recess (22) to prevent any fragments of either component dislodged during the pressing operation from escaping from between the components (10, 17), **characterised in that** the first component is an annular planetary gear ring and the second component is a tractor axle housing.

2. A method according to claim 1 in which the seal receiving recess (22) has a seal retaining groove (25) which receives a projection (24) on the seal (23) to hold the seal in the recess.

3. A method according to claim 1 or claim 2 in which the seal (23) is formed from polymeric material.

4. A method according to any one of claims 1 to 3 in which the seal (23) is of a generally L-shaped cross section with one arm of the L-shaped seal extending into the seal retaining groove (25) and the other arm (23a) of the seal extending over an outer face (10a) of the second component (10) at a location radially outboard of the first component (17).

5. A method according to any one of claims 1 to 4 in which either the outer peripheral surface of the first component (17) or the inner peripheral surface of the aperture (20) is provided with a groove (26) inward of the seal (23) receiving recess (22) which receives fragments dislodged during the pressing operation.

6. A tractor axle housing with an annular planetary ring gear (17), said housing (10) having an aperture (20) for receiving an annular planetary ring gear, **characterised by** said ring gear (17) having gripping formations (21) and a seal (23) receiving recess (22) on its outer peripheral surface, or said aperture having said gripping formations (21) and said seal receiving recess (22) in an inner peripheral surface of the aperture (20), said gripping formations (21) cutting into the co-operating surface of the housing (10) or the ring gear (17) to hold the ring gear in the aperture, wherein the recess (22) is provided with a sealing member (23).

## Patentansprüche

1. Verfahren zum Befestigen oder Sichern einer ersten Komponente (17) in einer Öffnung einer zweiten Komponente (10) mit den Verfahrensschritten Ausbildung von Greif-Strukturen (21) und einer eine Dichtung aufnehmenden Vertiefung (22) in einer äußeren Umfangsfläche der ersten Komponente (17) oder in einer inneren Umfangsfläche der Öffnung (20), Einpressen der ersten Komponente in die Öffnung in der zweiten Komponente, so dass die Greif-Strukturen (21) in die hiermit zusammenwirkende Fläche der anderen Komponente (10) schneiden, um die erste Komponente (17) in der Öffnung (20) zu halten, und Einsetzen eines Dichtelements (23) in die dichtende Vertiefung (22), um zu vermeiden, dass jedwedes Fragment jeder Komponente, welches während des pressenden Betriebs oder Verfahrensschritts entfernt oder abgetrennt wird, zwischen den Komponenten (10, 17) austritt, **dadurch gekennzeichnet, dass** die erste Komponente ein ringförmiger Planetenradring ist und die zweite Komponente ein Achsgehäuse eines Traktors oder Zugfahrzeugs ist.

2. Verfahren nach Anspruch 1, **dadurch gekennzeichnet, dass** die die Dichtung aufnehmende Vertiefung (22) eine die Dichtung haltende oder sichernde Nut (25) besitzt, welche einen Vorsprung (24) der Dichtung (23) aufnimmt, um die Dichtung in der Vertiefung zu halten.

3. Verfahren nach Anspruch 1 oder 2, **dadurch gekennzeichnet, dass** die Dichtung (23) aus oder mit einem Polymermaterial gebildet ist.

4. Verfahren nach einem der Ansprüche 1 bis 3, **dadurch gekennzeichnet, dass** die Dichtung (23) einen grundsätzlich L-förmigen Querschnitt besitzt, wobei sich ein Schenkel der L-förmigen Dichtung in die die Dichtung haltende oder sichernde Nut (25) erstreckt und sich der andere Schenkel (23a) der Dichtung an einem Ort radial außerhalb der ersten Komponente (17) über eine äußere Stirnseite oder Fläche (10a) der zweiten Komponente (10) erstreckt.

5. Verfahren nach einem der Ansprüche 1 bis 4, **dadurch gekennzeichnet, dass** entweder die äußere Umfangsfläche der ersten Komponente (17) oder die innere Umfangsfläche der Öffnung (20) mit einer Nut (25) innerhalb der die Dichtung (23) aufnehmenden Vertiefung (22) ausgestattet ist, welche Fragmente aufnimmt, die während des pressenden Betriebs oder Verfahrensschritts entfernt oder abgetrennt werden.

6. Achsgehäuse eines Traktors oder Zugfahrzeugs mit einem ringförmigen Planetenradring (17), wobei das Achsgehäuse (10) eine Öffnung (20) zur Aufnahme eines ringförmigen Planetenradrings besitzt, **dadurch gekennzeichnet, dass** der Planetenradring (17) Greif-Strukturen (21) und eine eine Dichtung (23) aufnehmende Vertiefung (22) an der äußeren Umfangsfläche besitzt oder dass die Öffnung Greif-Strukturen (21) besitzt und die die Dichtung aufnehmende Vertiefung (22) in einer inneren Umfangsfläche der Öffnung (20) besitzt, wobei die Greif-Strukturen (21) in eine in Wechselwirkung tretende Fläche des Gehäuses (10) oder des Planetenradrings (17) schneiden, um den Planetenradring in der Öffnung zu halten, wobei die Vertiefung (22) mit einem Dichtelement (23) ausgestattet ist.

## Revendications

1. Procédé de fixation d'un premier composant (17) dans une ouverture (20) sur un second composant (10), le procédé comprenant les étapes de formation de structures d'accrochage (21) et d'une cavité de réception de joint (22) sur une surface périphérique externe du premier composant (17) ou sur une surface périphérique interne de l'ouverture (20), de pressage du premier composant dans l'ouverture sur le second composant de telle sorte que les structures d'accrochage (21) entaillent la surface coopérante de l'autre composant (10) afin de maintenir le premier composant (17) dans l'ouverture (20), et d'insertion d'un élément d'étanchéité (23) dans la cavité d'étanchéité (22) afin d'empêcher des fragments quelconques d'un composant ou l'autre arrachés au cours de l'opération de pressage de s'échapper de l'intervalle entre les composants (10, 17), **caractérisé en ce que** le premier composant est une couronne d'engrenage planétaire annulaire et le second composant est un boîtier d'axe de tracteur.

2. Procédé selon la revendication 1 dans lequel la cavité de réception de joint (22) comporte une rainure de retenue de joint (25) qui reçoit une saillie (24) sur le joint (23) afin de maintenir le joint dans la cavité.

3. Procédé selon la revendication 1 ou la revendication 2 dans lequel le joint (23) est formé en un matériau polymère.

4. Procédé selon l'une quelconque des revendications 1 à 3 dans lequel le joint (23) présente, en section transversale, sensiblement une forme en L, la branche du joint en forme de L s'étendant dans la rainure de retenue de joint (25) et l'autre branche (23a) du joint s'étendant au-dessus d'une face externe (10a) du second composant (10) au niveau d'un emplacement radialement à l'extérieur du premier composant (17).

5. Procédé selon l'une quelconque des revendications 1 à 4 dans lequel soit la surface périphérique externe du premier composant (17) soit la surface périphérique interne de l'ouverture (20) comporte une rainure (26) à l'intérieur de la cavité (22) de réception du joint (23) qui reçoit les fragments arrachés au cours de l'opération de pressage.

6. Boîtier d'essieu de tracteur avec une couronne d'engrenage planétaire annulaire (17), ledit boîtier (10) présentant une ouverture (20) afin de recevoir une couronne d'engrenage planétaire annulaire, **caractérisé par le fait que** soit ladite couronne d'engrenage (17) comporte des structures d'accrochage (21) et une cavité (22) de réception de joint (23) sur sa surface périphérique externe, soit ladite ouverture comporte lesdites structures d'accrochage (21) et ladite cavité (22) de réception de joint sur une surface périphérique interne de l'ouverture (20), lesdites structures d'accrochage (21) entaillant la surface coopérante du boîtier (10) ou de la couronne d'engrenage (17) de manière à maintenir la couronne d'engrenage dans l'ouverture, dans lequel la cavité (22) comporte un élément d'étanchéité (23).
